# EUROPEAN PATENT SPECIFICATION

(11) **EP 3 629 012 B1**
(45) Date of publication and mention of the grant of the patent: **15.06.2022**
(21) Application number: 19190432.5
(22) Date of filing: 07.08.2019
(51) Int. Cl.: G01N 21/95

(54) **ADJUSTMENT STATE EVALUATION METHOD AND ADJUSTMENT METHOD FOR DEFECT EVALUATION APPARATUS**
ANPASSUNGSZUSTANDBEWERTUNGSVERFAHREN UND ANPASSUNGSVERFAHREN FÜR DEFEKTBEWERTUNGSVORRICHTUNG
PROCÉDÉ D'ÉVALUATION DE L'ÉTAT DE RÉGLAGE ET PROCÉDÉ DE RÉGLAGE D'APPAREIL D'ÉVALUATION DES DÉFAUTS

(30) Priority: 26.09.2018 JP 2018179991
(43) Date of publication of application: 01.04.2020
(73) Proprietor: Sumco Corporation, Minato-ku, Tokyo 105-8634 (JP)
(72) Inventor: UMENO, Shigeru, Tokyo, 105-8634 (JP)
(74) Representative: Sticht, Andreas

(56) References cited:
- EP-A1- 0 562 630
- US-A- 5 196 716

## Description

### TECHNICAL FIELD

The present invention relates to an adjustment method for a defect evaluation apparatus and, more particularly, to an adjustment method for a defect evaluation apparatus configured to irradiate a single crystal with light and detect scattered light generated by a crystal defect contained in the single crystal to thereby evaluate the crystal defect.

### BACKGROUND ART

As a method of evaluating a crystal defect contained in a single crystal such as a silicon wafer, an evaluation method using an infrared tomography system is known. For example, in International Publication No. WO 2006/080271, the main surface of a silicon wafer whose center has been cleaved is irradiated with laser light, and scattered light emitted from the cleavage surface is detected using a camera, to thereby evaluate a minute crystal defect existing inside the silicon wafer.

However, in defect evaluation apparatus of this type, the sharpness of an image obtained by the scattered light significantly varies depending on the adjustment state of mainly an optical system, so that it is necessary to finely adjust the defect evaluation apparatus before actual measurement so as to achieve the sharpest image. Conventionally, this fine adjustment is conducted by evaluating an image through visual observation while varying the incident position and incident angle of the laser light and determining the incident position and angle at which the image is sharpest. However, such a method depends on operator's sensation and, thus, it is difficult to obtain a stable adjustment result.

EP 0 562 630 A1 discloses defect detection by irradiating a crystal with a laser beam and evaluating scattered light. An integrated scattering intensity is calculated based on a peak scattering intensity.

### SUMMARY OF INVENTION

An object of the present invention is therefore to provide an adjustment method for a defect evaluation apparatus for correctly adjusting the defect evaluation apparatus without depending on operator's sensation.

As a result of intensive studies of a method of quantitatively evaluating the sharpness of an image obtained by scattered light, the present inventor found that the ratio between the peak intensity of scattered light obtained based on each crystal defect and the integrated intensity thereof is constant irrespective of the size of the crystal defect when the adjustment state is fixed. This means that when the ratio between the peak intensity of the scattered light and the integrated intensity thereof is used as an index, the present adjustment state of the defect evaluation apparatus can be evaluated irrespective of the crystal defect size.

The present invention has been made based on the above technical knowledge, and an adjustment state evaluation method for a defect evaluation apparatus according to the present invention is a method that irradiates a single crystal with light and detects scattered light generated by a crystal defect contained in the single crystal to thereby evaluate the crystal defect and characterized in that a ratio between a peak intensity of the scattered light and an integrated intensity thereof is used as an index to evaluate an adjustment state of the defect evaluation apparatus.

According to the present invention, an index is acquired as the ratio between the peak intensity of the scattered light and the integrated intensity thereof as an index, so that the sharpest image can be achieved without depending on an operator's sensation. According to the invention, when peak intensity/integrated intensity is used as an index, it can be determined that the larger the index value, the sharper the image is; therefore, the defect evaluation apparatus is adjusted so that the index value becomes maximum.

A defect evaluation apparatus adjustment method according to the present invention may be configured to adjust an incident position of light onto the single crystal on the basis of the acquired index. This allows the incident position at which the image is sharpest to be quantitatively specified.

A defect evaluation apparatus adjustment method according to the present invention may be configured to adjust an incident angle of light onto the single crystal on the basis of the acquired index. This allows the incident angle at which the image is sharpest to be quantitatively specified.

An defect evaluation apparatus adjustment method according to the present invention may be configured to adjust a scan direction of light with respect to the single crystal on the basis of the acquired index. This allows the scan direction in which the image is sharpest to be quantitatively specified.

Outside the claimed scope, it is also possible to evaluate a blurring of the scattered light on the basis of the above index. This allows, for example, the presence/absence of minute vibration of a stage on which the single crystal is placed to be evaluated. Thus, by applying vibration control countermeasures, a sharper image can be obtained.

As described above, according to the present invention, the ratio between the peak intensity of the scattered light and the integrated intensity thereof is used as an index, so that it is possible to quantitatively perform an adjustment operation for achieving the sharpest image.

### BRIEF DESCRIPTION OF DRAWINGS

The above and other objects, features and advantages of this invention will become more apparent by reference to the following detailed description of the invention taken in conjunction with the accompanying drawings, wherein:
FIG. 1 is a block diagram for explaining the configuration of a defect evaluation apparatus 10 according a preferred embodiment of the present invention;
FIGS. 2A and 2B are views each schematically illustrating the intensity distribution of a scattered image displayed on the monitor 14 and, more particularly, FIG. 2A illustrates a case where the crystal defect is out of focus, or the scattered image is blurred, and FIG. 2B illustrates a case where the crystal defect is in focus, and the scattered image is not blurred;
FIG. 3 is a schematic drawing for explaining an incident position ΔY and an incident angle θY;
FIG. 4 is a flowchart showing an adjustment method of the incident position ΔY;
FIG. 5 is a flowchart showing an adjustment method of the incident angle θY;
FIG. 6 is a schematic drawing for explaining a scan direction θX;
FIG. 7 is a flowchart showing an adjustment method of a scan direction θX;
FIG. 8 is a flowchart showing a method for determining the type or position of the vibration control member;
FIG. 9 is a graph showing the result of the example 1;
FIG. 10 is a graph showing the result of the example 2;
FIG. 11 is a graph showing the result of the example 3; and
FIG. 12 is a graph showing the result of the example 4 .

### DESCRIPTION OF EMBODIMENTS

A preferred embodiment of the present invention will be described in detail below with reference to the accompanying drawings.

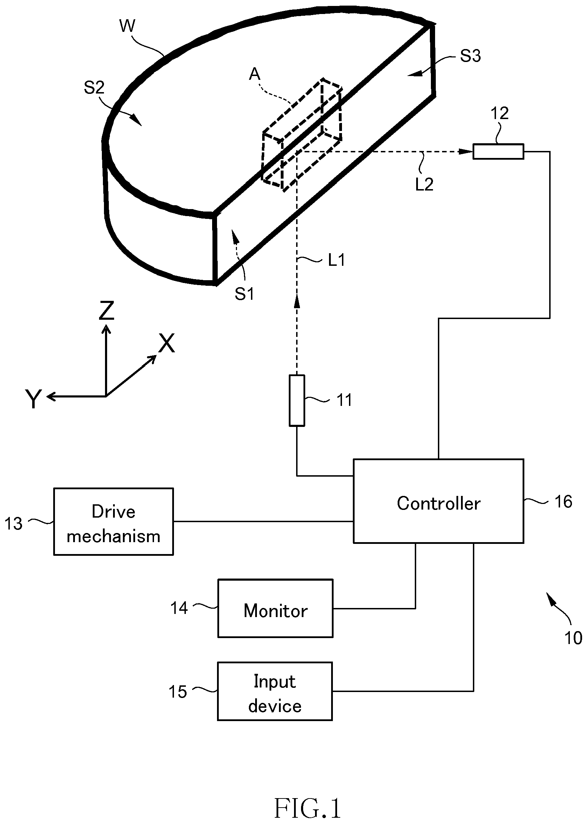

FIG. 1 is a block diagram for explaining the configuration of a defect evaluation apparatus 10 according a preferred embodiment of the present invention.

As illustrated in FIG. 1, the defect evaluation apparatus 10 according to the present embodiment includes a laser irradiator 11 that irradiates a silicon wafer W to be evaluated with infrared laser light L1, a detector 12 that detects scattered light L2 emitted from the silicon wafer W, a drive mechanism 13 that can drive the silicon wafer W placed on a not-shown stage in the X-, Y-, and Z-directions, a monitor 14 that displays an image of the scattered light obtained by the detector 12, an input device 15 for an operator to perform input operation, and a controller 16 that controls the entire operation of the defect evaluation apparatus 10.

The silicon wafer W to be evaluated is placed on a not-shown stage such that a main surface S1 that has been polished or etched to have a mirror surface and a back surface S2 positioned on the side opposite to the main surface S1 constitute the XY plane. As illustrated in FIG. 1, the silicon wafer W is cleaved to about 1/2 size. The infrared laser light L1 is incident on the main surface S1, and the scattered light L2 emitted from a cleavage surface S3 is detected by the detector 12. At the time of actual defect evaluation, the drive mechanism 13 is used to move the silicon wafer W in the X-direction to scan a detection position in the X-direction. As a result, an image of a crystal defect existing in an area A inside the silicon wafer W is displayed on the monitor 14.

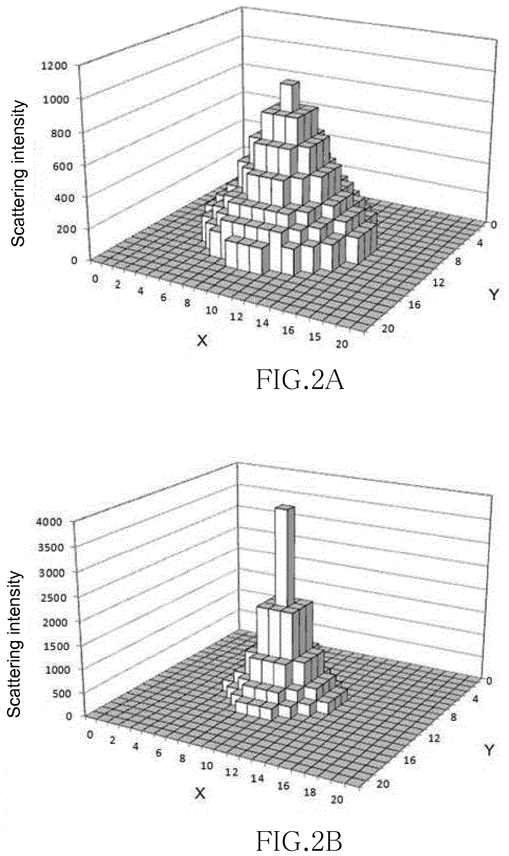

FIGS. 2A and 2B are views each schematically illustrating the intensity distribution of a scattered image displayed on the monitor 14 and, more particularly FIG. 2A illustrates a case where the crystal defect is out of focus, or the scattered image is blurred, and FIG. 2B illustrates a case where the crystal defect is in focus, and the scattered image is not blurred.

As illustrated in FIGS. 2A and 2B, the scattered image has a two-dimensionally expansion. The scattered image of FIG. 2A has a low peak intensity at the center and a large two-dimensional expansion, while the scattered image of FIG. 2B has a high peak intensity at the center and a small two-dimensional expansion. Thus, assuming that the peak intensity (intensity of a pixel having the highest intensity) is P1 and that integrated intensity (sum of the intensities of respective pixels constituting the scattered image having the two-dimensional expansion) is P2, it can be determined that the larger a focusing index F obtained by P1/P2 is, the sharper the image is and the better the crystal defect is focused.

The peak intensity P1 is proportional to the sixth power of the crystal defect size and significantly varies depending on the relationship between the crystal defect and a focal point. Thus, the focus determination cannot be achieved with only the peak intensity P1 as the index. On the other hand, the value of the focusing index F is constant irrespective of the crystal defect size when the positional relationship between the crystal defect and the focal point is not changed. That is, both the peak intensity P1 and integrated intensity P2 are proportional to the sixth power of the crystal defect size, so that the ratio therebetween is constant irrespective of the crystal defect size. This means that it is possible to evaluate, irrespective of the crystal defect size, whether or not the present adjustment state of the defect evaluation apparatus 10, i.e., adjustment parameters for an optical system is adequate on the basis of the focusing index F.

Examples of the adjustment parameters for the defect evaluation apparatus 10 include the incident position, incident angle, and scan angle of the infrared laser light L1.

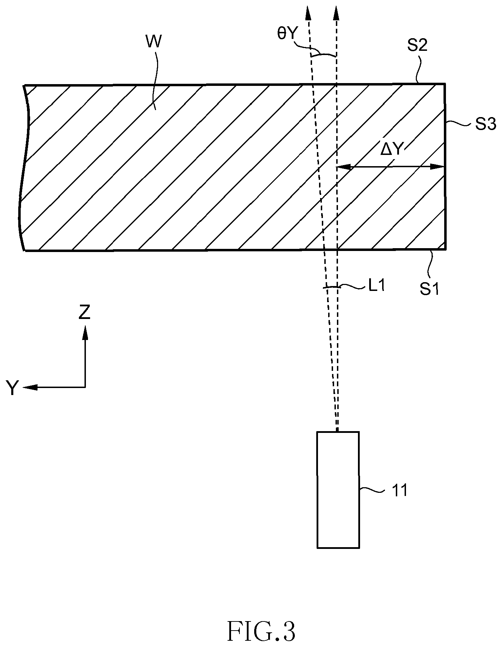

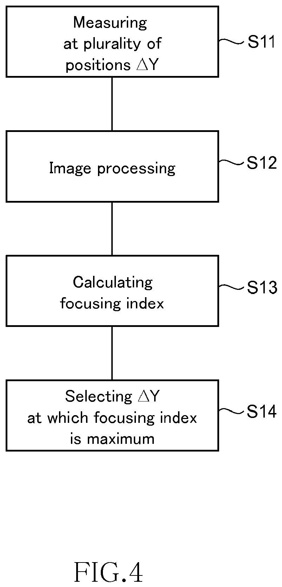

For example, as illustrated in FIG. 3, when a distance ΔY from the cleavage surface S3 of the silicon wafer W to the incident position of the infrared laser light L1 in the Y-direction is changed, the sharpness of the scattered image changes. Thus, unless the infrared laser light L1 is incident onto the position corresponding to the distance ΔY at which the sharpest image can be achieved, minute crystal defect does not appear in the scattered image but disappears, disabling an accurate evaluation of defect density. To specify the distance ΔY at which the sharpest image can be achieved, as illustrated in FIG. 4, a plurality of scattered images obtained by the detector 12 are acquired through the input device 15 while changing the distance ΔY (S11), followed by image processing by the controller 16 (S12) . Then, the ratio between the peak intensity P1 and the integrated intensity P2 is calculated for one or two or more crystal defects to calculate the focusing index F (S13). Then, by selecting the distance ΔY at which the focusing index F is maximum as the incident position at the time of actual defect evaluation (S14), a more accurate evaluation of defect density can be achieved.

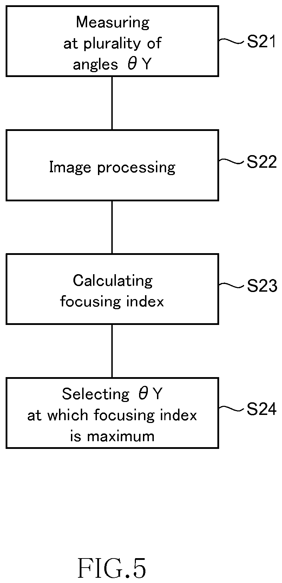

Further, as illustrated in FIG. 3, the incident angle of the infrared laser light L1 needs to coincide with the Z-axis, and when a Y-direction angle θY with respect to the Z-axis direction increases, a difference occurs in the sharpness of the scattered image in the Z-direction. Thus, unless the infrared laser light L1 is incident at the angle θY at which a sharp image can be achieved across the entire area in the Z-direction, a minute crystal defect does not appear in the scattered image but disappears, disabling an accurate evaluation of the crystal defect. To specify the angle **θ**Y at which a sharp image can be achieved across the entire area in the Z-direction, as illustrated in FIG. 5, a plurality of scattered images obtained by the detector 12 are acquired through the input device 15 while varying the angle **θ**Y (S21), followed by image processing by the controller 16 (S22) . Then, the ratio between the peak intensity P1 and the integrated intensity P2 is calculated for one or two or more crystal defects to calculate the focusing index F (S23) . Then, by selecting the angle **θ**Y at which the focusing index F is maximum as the incident angle at the time of actual defect evaluation (S24), a more accurate evaluation of defect density can be achieved.

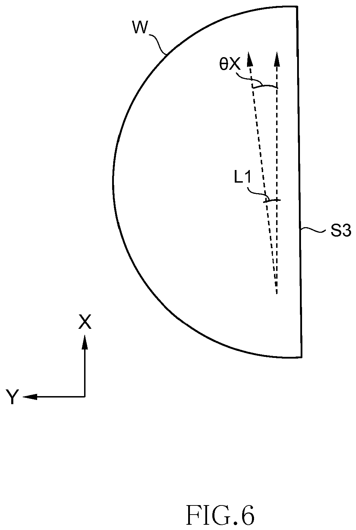

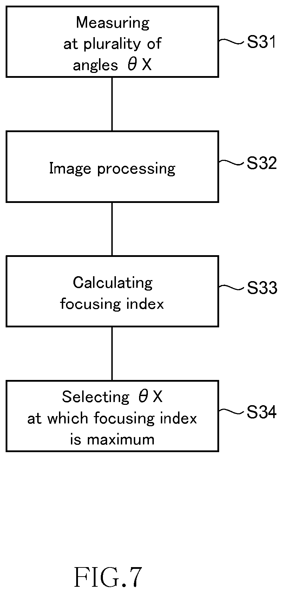

Further, as illustrated in FIG. 6, the scan direction of the infrared laser light L1 needs to match the X-axis, and when an angle **θ**X exists in the scan direction with respect to the X-direction, the sharpness level of the scattered image varies depending on the scan position. Thus, unless the infrared laser light L1 is incident at the angle θX at which a sharp image can be achieved irrespective of the scan position, defect density varies depending on the scan position. To specify the angle **θ**X at which the sharp image can be achieved irrespective of the scan position, as illustrated in FIG. 7, a plurality of scattered images obtained by the detector 12 are acquired through the input device 15 while varying the angle **θ**X (S31), followed by image processing by the controller 16 (S32) . Then, the ratio between the peak intensity P1 and the integrated intensity P2 is calculated for one or two or more crystal defects to calculate the focusing index F (S33) . Then, by selecting the angle **θ**X at which the focusing index F is maximum and variation in the focusing index F according to the scan position is least, as the scan direction at the time of actual defect evaluation (S34), a more accurate evaluation of defect density can be achieved.

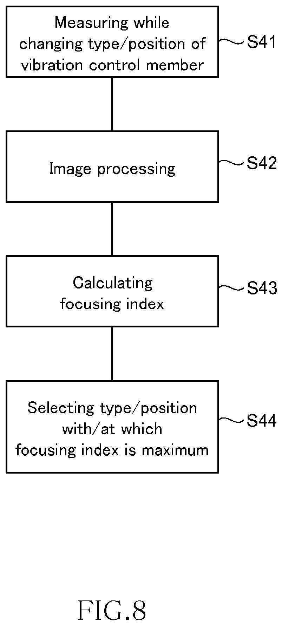

Further, the adjustment of the defect evaluation apparatus 10 using the focusing index F can be applied to reduction in image blurring not only due to the incident position, incident angle and scan angle of the infrared laser light L1, but to vibration of the stage on which the silicon wafer is placed. For example, as illustrated in FIG. 8, a plurality of scattered images obtained by the detector 12 are acquired while varying the type, position, or the like of the vibration control member placed on the stage (S41), followed by image processing by the controller 16 (S42) . Then, the ratio between the peak intensity P1 and the integrated intensity P2 is calculated for one or two or more crystal defects to calculate the focusing index F (S43) . Then, by selecting the type, position, or the like at/with which the focusing index F becomes maximum (S44), defect density can be evaluated in a state where image blurring is suppressed most.

While the preferred embodiment of the present invention has been described, the present invention is not limited to the above embodiment and may be variously modified within the scope of the present invention, and all such modifications are included in the present invention.

For example, although the present invention is applied to a defect evaluation apparatus that evaluates a crystal defect contained in a silicon wafer in the above embodiment, the application of the present invention is not limited to this, and the present invention may be applied to an evaluation apparatus that evaluates a single crystal other than the silicon wafer. Further, light to be irradiated onto the single crystal need not be the infrared laser light, and may be of one of other wavelengths.

### [Example 1]

A CZ silicon wafer of diameter: 300 mm, plane orientation: (100), resistivity: 10 Ω·cm, oxygen concentration: 12 × 10¹⁷ cm⁻³ was subjected to two-step heat treatment, one of which being processed at 800°C for 4 hours and the other at 1000°C for 16 hours to generate crystal defects (oxygen precipitate) . This wafer was cleaved to 1/2 size at <110> surface to obtain a sample for adjustment of the optical system of the defect evaluation apparatus 10 (infrared tomography system) illustrated in FIG. 1. The obtained optical system adjustment sample was placed on a not-shown stage, and the incident position (Y-direction distance ΔY from the cleavage surface S3) of the infrared laser light L1 was adjusted in the following procedure.

### (Comparative Example 1)

Scattered images photographed with the incident position (ΔY) of the infrared laser light L1 sequentially shifted by 1 µm were displayed on the monitor 14, and the sharpness of the scattered images was judged by the visual sensation of an operator. Then, adjustment was made such that the infrared laser light L1 was incident onto a position at which the scattered image is sharpest, and defect density obtained after the adjustment was measured. A series of the above adjustment operations was conducted by five operators and each person carried out the series of the operations five times. Defect density values obtained after the adjustment are shown in Table 1. R (%) shown in Table 1 is the index of variation (R for each operation obtained by dividing a difference between the maximum and minimum values by the average value of the five operators, R for each operator obtained by dividing a difference between the maximum and minimum values by the average value of the five operations, and R for the average values of the respective five operators obtained by dividing a difference between the maximum and minimum values of the average values of the respective five operators by the average value among the average values of the respective five operators).

**[Table 1]**

| Operator | Defect density (cm⁻³) | | | | | | R for 5 times (%) |
|---|---|---|---|---|---|---|---|
| | 1st. | 2nd. | 3rd. | 4th. | 5th. | Average value | |
| A | 4.86×10⁸ | 4.90×10⁸ | 5.05×10⁸ | 4.74×10⁸ | 5.07×10⁸ | 4.93×10⁸ | 6.68 |
| B | 5.15×10⁸ | 4.91×10⁸ | 5.27×10⁸ | 5.05×10⁸ | 4.97×10⁸ | 5.07×10⁸ | 7.19 |
| C | 5.20×10⁸ | 4.59×10⁸ | 4.73×10⁸ | 5.17×10⁸ | 4.80×10⁸ | 4.90×10⁸ | 12.57 |
| D | 4.77×10⁸ | 4.73×10⁸ | 5.01×10⁸ | 4.72×10⁸ | 5.05×10⁸ | 4.86×10⁸ | 6.78 |
| E | 4.81×10⁸ | 5.02×10⁸ | 4.95×10⁸ | 4.94×10⁸ | 4.94×10⁸ | 4.93×10⁸ | 4.08 |
| R for 5 opera tors (%) | 8.67 | 8.82 | 10.78 | 9.06 | 4.53 | 4.25 | |

### (Example 1)

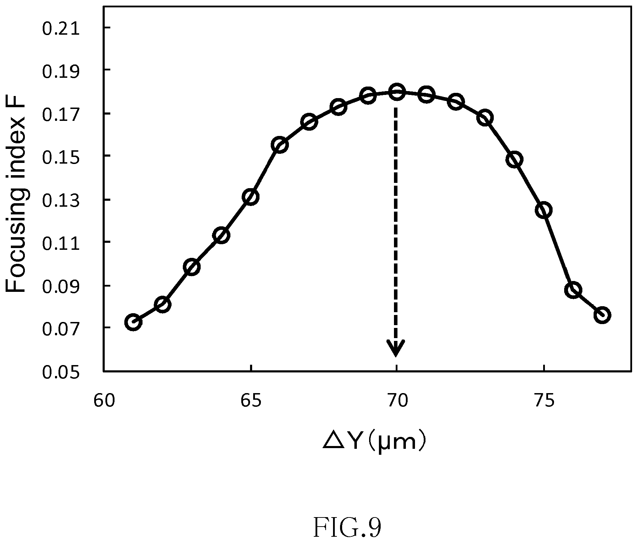

Scattered images photographed with the incident position (ΔY) of the infrared laser light L1 sequentially shifted by 1 µm were subjected to image processing by the controller 16, and the ratio (P1/P2) between the peak intensity P1 and the integrated intensity P2 of the scattered light generated due to individual crystal defects was calculated to thereby obtain the focusing indices F corresponding to the individual crystal defects. Then, the average value of the focusing indices F corresponding to all the crystal defects was calculated. Subsequently, adjustment was made such that the infrared laser light L1 was incident again onto the position ΔY at which the average focusing index F is maximum, and defect density obtained after the adjustment was measured. The relationship between the position ΔY and the focusing index F is as illustrated in FIG. 9. As illustrated in FIG. 9, in the Example 1, the maximum value (about 0.18) of the focusing index F was obtained when the incident position ΔY of the infrared laser light L1 was 70 µm. A series of the above adjustment operations was conducted by five operators and each person carried out the series of the operations five times. Defect density values obtained after the adjustment are shown in Table 2.

**[Table 2]**

| Operator | Defect density (cm⁻³) | | | | | | R for 5 times(%) |
|---|---|---|---|---|---|---|---|
| | 1st. | 2nd. | 3rd. | 4th. | 5th. | Average value | |
| A | 5.09×10⁸ | 5.08×10⁸ | 5.08×10⁸ | 5.07×10⁸ | 5.15×10⁸ | 5.09×10⁸ | 1.64 |
| B | 5.13×10⁸ | 5.10×10⁸ | 5.15×10⁸ | 5.09×10⁸ | 5.11×10⁸ | 5.12×10⁸ | 1.24 |
| C | 5.15×10⁸ | 5.04×10⁸ | 5.09×10⁸ | 5.12×10⁸ | 5.10×10⁸ | 5.10×10⁸ | 2.16 |
| D | 5.04×10⁸ | 5.10×10⁸ | 5.02×10⁸ | 5.03×10⁸ | 5.17×10⁸ | 5.07×10⁸ | 2.83 |
| E | 5.05×10⁸ | 5.10×10⁸ | 5.09×10⁸ | 5.02×10⁸ | 5.12×10⁸ | 5.07×10⁸ | 2.10 |
| R for 5 opera tors (%) | 2.29 | 1.11 | 2.56 | 1.97 | 1.23 | 0.90 | |

As is clear from the comparison between Tables 1 and 2, both a variation in multiple adjustment operations by the same operator and a variation among the five operators are smaller in Example 1 than in Comparative Example 1.

### [Example 2]

A CZ silicon wafer of diameter: 300 mm, plane orientation: (100), resistivity: 10 **Ω**·cm, oxygen concentration: 13 × 10¹⁷ cm⁻³ was subjected to two-step heat treatment, one of which being processed at 800°C for 4 hours and the other at 1000°C for 16 hours to generate crystal defects (oxygen precipitate) . This wafer was cleaved to 1/2 size at <110> surface to obtain a sample for adjustment of the optical system of the defect evaluation apparatus 10 (infrared tomography system) illustrated in FIG. 1. The obtained optical system adjustment sample was placed on a not-shown stage, and the incident angle (Y-direction angle **θ**Y with respect to the Z-axis direction) of the infrared laser light L1 was adjusted in the following procedure.

### (Comparative Example 2)

Defect density was measured after the incident angle **θ**Y of the infrared laser light L1 was adjusted by the operator's visual sensation such that the sharpness of the scattered image displayed on the monitor 14 was uniform in the depth direction. This operation was performed five times, and obtained defect density values are shown in the upper row of Table 3.

### (Example 2)

Photographed scattered images were subjected to image processing by the controller 16, and the ratio (P1/P2) between the peak intensity P1 and the integrated intensity P2 of the scattered light generated due to individual crystal defects was calculated to thereby obtain the focusing indices F corresponding to the individual crystal defects. Then, the average value of the focusing indices F corresponding to all the crystal defects was calculated. Subsequently, the incident angle θY of the infrared laser light L1 was adjusted so that the average focusing index F becomes maximum, and defect density obtained after the adjustment was measured. The result is shown in the lower row of Table 3.

**[Table 3]**

| Adjustment method | Defect density (cm⁻³) | | | | | |
|---|---|---|---|---|---|---|
| | 1st. | 2nd. | 3rd. | 4th. | 5th. | Maximum value |
| Comparative Example 2 | 4.98×10⁹ | 4.83×10⁹ | 4.77×10⁹ | 5.14×10⁹ | 5.03×10⁹ | 5.14×10⁹ |
| Example 2 | 5.19×10⁹ | - | - | - | - | - |

As shown in Table 3, in the method of Comparative Example 2, a variation occurred in the defect density values obtained in the five operations, and the maximum value was 5.14 × 10⁹ cm⁻³, while in the method of Example 2, a value (5.19 × 10⁹ cm⁻³) exceeding the above maximum value was obtained immediately in one operation.

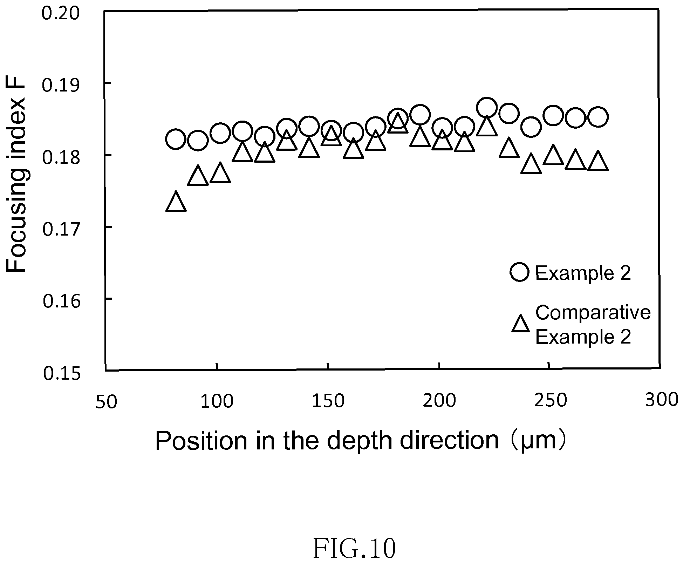

Further, to show a change in the focusing degree in the depth direction, the average value of focusing indices corresponding to the individual defects measured every 10 µm in the depth direction was calculated. The result is shown in FIG. 10. In FIG. 10, plots denoted by O are each the focusing index F in Example 2, and plots denoted by Δ are each the focusing index F in Comparative Example 2 (first operation in Table 3) . As is clear from FIG. 10, overall, the value of the focusing index F is larger, and a variation in the depth direction is smaller in Example 2. This means that the method according to the present invention is suitable for the adjustment of the incident angle of the infrared laser light L1.

### [Example 3]

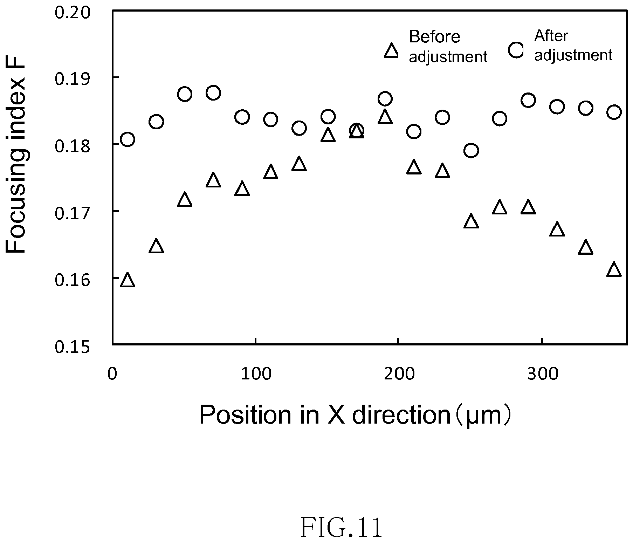

A silicon wafer W same as that used in Example 2 was used as a sample for scan direction adjustment. The sample was placed on a not-shown stage, and the scan direction was adjusted. The ratio (P1/P2) between the peak intensity P1 and the integrated intensity P2 was calculated for individual crystal defects obtained before and after the adjustment, whereby the focusing indices F corresponding to the individual crystal defects were obtained. Then, the X-coordinate was divided into a plurality of sections at 20 µm intervals, and the average value of the focusing indices F in each section was calculated. The result obtained by plotting the average values with respect to the X-coordinate is shown in FIG. 11.

In the scan direction adjustment, focusing is made at the center position of a scan range, so that the value of the focusing index F is large around the center of the scan range even before the adjustment. However, before the adjustment, the value of the focusing index F is small at both ends of the scan range. After the adjustment, the entire scan range is in focus, and the focusing index F becomes large and substantially constant as a whole. As described above, the focusing index F is effectively used for the scan direction adjustment.

### [Example 4]

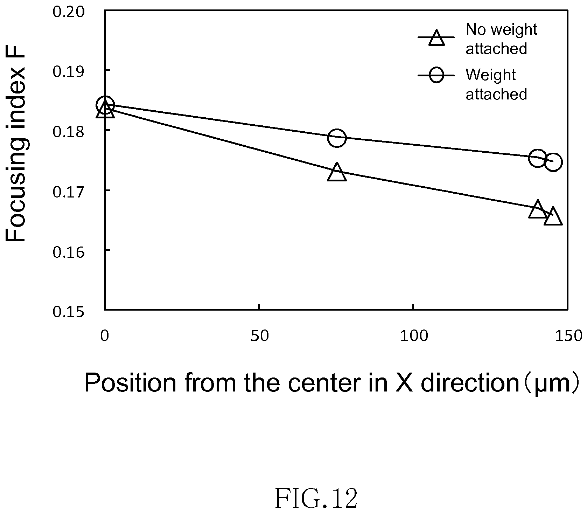

A silicon wafer W same as that used in Example 2 was used as a sample for confirming a reduction effect of image blurring. The sample was placed on a not-shown stage, and the scattered image of defect was photographed at four positions: the center of the wafer; a position 75 mm separated from the center; a position 140 mm separated from the center; and a position 145 mm separated from the center. The obtained images were subjected to image processing by the controller 16 to calculate the focusing indices F corresponding to individual defects, and the average value thereof was set as the focusing index F at each measurement position. The result is illustrated in FIG. 12. In FIG. 12, plots denoted by Δ are each the focusing index F when no vibration countermeasures are applied to the stage, and plots denoted by O are each the focusing index F when a weight is attached to the back side of the end of the stage as vibration countermeasures. As is clear from FIG. 12, when the vibration countermeasures are applied, the value of the focusing index F at the outer peripheral portion of the silicon wafer W is increased. As described above, the focusing index F is effective also for the evaluation of image blurring.

### [Reference Signs List]

- 10:: Defect evaluation apparatus
- 11:: Laser irradiator
- 12:: Detector
- 13:: Drive mechanism
- 14:: Monitor
- 15:: Input device
- 16:: Controller
- L1:: Infrared laser light
- L2:: Scattered light
- S1:: Main surface
- S2:: Back surface
- S3:: Cleavage surface
- W:: Silicon wafer
- **θ**X:: Scan direction
- **θ**Y:: Incident angle
- ΔY:: Incident position

## Claims

1. A defect evaluation apparatus (10) adjustment method for a defect evaluation apparatus (10) that irradiates a single crystal (W) with light and detects scattered light generated by a crystal defect contained in the single crystal (W) to thereby evaluate the crystal defect comprising:
acquiring an index as a ratio of a peak intensity P1 of the scattered light to an integrated intensity P2 thereof, and
adjusting an incident position (ΔY) of light onto the single crystal so that the acquired index P1/P2 becomes maximum.

2. A defect evaluation apparatus (10) adjustment method for a defect evaluation apparatus (10) that irradiates a single crystal (W) with light and detects scattered light generated by a crystal defect contained in the single crystal (W) to thereby evaluate the crystal defect comprising:
acquiring an index as a ratio of a peak intensity P1 of the scattered light to an integrated intensity P2 thereof; and
adjusting an incident angle (ΘY) of light onto the single crystal (W) so that the acquired index P1/P2 becomes maximum.

3. A defect evaluation apparatus (10) adjustment method for a defect evaluation apparatus (10) that irradiates a single crystal (W) with light and detects scattered light generated by a crystal defect contained in the single crystal (W) to thereby evaluate the crystal defect comprising:
acquiring an index as a ratio of a peak intensity P1 of the scattered light to an integrated intensity P2 thereof; and
adjusting a scan direction (ΘX) of light with respect to the single crystal (W) so that the acquired index P1/P2 becomes maximum.

## Patentansprüche

1. Verfahren zum Einstellen einer Defektbewertungsvorrichtung (10) für eine Defektbewertungsvorrichtung (10), die einen Einkristall (W) mit Licht bestrahlt und gestreutes Licht erfasst, das durch einen in dem Einkristall (W) enthaltenen Kristalldefekt erzeugt wird, um dadurch den Kristalldefekt zu bewerten, umfassend:
Erfassen eines Index als ein Verhältnis einer Spitzenintensität P1 des gestreuten Lichts zu einer integrierten Intensität P2 davon, und
Einstellen einer Einfallsposition (ΔY) von Licht auf den Einkristall, so dass der erfasste Index P1/P2 maximal wird.

2. Verfahren zum Einstellen einer Defektbewertungsvorrichtung (10) für eine Defektbewertungsvorrichtung (10), die einen Einkristall (W) mit Licht bestrahlt und gestreutes Licht erfasst, das durch einen in dem Einkristall (W) enthaltenen Kristalldefekt erzeugt wird, um dadurch den Kristalldefekt zu bewerten, umfassend:
Erfassen eines Index als ein Verhältnis einer Spitzenintensität P1 des gestreuten Lichts zu einer integrierten Intensität P2 davon; und
Einstellen eines Einfallswinkels (ΘY) von Licht auf den Einkristall (W), so dass der erfasste Index P1/P2 maximal wird.

3. Verfahren zum Einstellen einer Defektbewertungsvorrichtung (10) für eine Defektbewertungsvorrichtung (10), die einen Einkristall (W) mit Licht bestrahlt und gestreutes Licht erfasst, das durch einen in dem Einkristall (W) enthaltenen Kristalldefekt erzeugt wird, um dadurch den Kristalldefekt zu bewerten, umfassend:
Erfassen eines Index als ein Verhältnis einer Spitzenintensität P1 des gestreuten Lichts zu einer integrierten Intensität P2 davon; und
Einstellen einer Abtastrichtung (ΘX) von Licht in Bezug auf den Einkristall (W), so dass der erfasste Index P1/P2 maximal wird.

## Revendications

1. Procédé de réglage d'appareil d'évaluation de défauts (10) pour un appareil d'évaluation de défauts (10) qui irradie un monocristal (W) avec de la lumière et détecte de la lumière diffusée générée par un défaut cristallin contenu dans le monocristal (W) pour évaluer ainsi le défaut cristallin, comprenant :
l'acquisition d'un indice prenant la forme d'un rapport entre une intensité maximale P1 de la lumière diffusée et une intensité intégrée P2 de celle-ci ; et
le réglage d'une position d'incidence (ΔY) de la lumière sur le monocristal de telle sorte que l'indice P1/P2 acquis devienne maximal.

2. Procédé de réglage d'appareil d'évaluation de défauts (10) pour un appareil d'évaluation de défauts (10) qui irradie un monocristal (W) avec de la lumière et détecte de la lumière diffusée générée par un défaut cristallin contenu dans le monocristal (W) pour évaluer ainsi le défaut cristallin, comprenant :
l'acquisition d'un indice prenant la forme d'un rapport entre une intensité maximale P1 de la lumière diffusée et une intensité intégrée P2 de celle-ci ; et
le réglage d'un angle d'incidence (ΘY) de la lumière sur le monocristal (W) de telle sorte que l'indice P1/P2 acquis devienne maximal.

3. Procédé de réglage d'appareil d'évaluation de défauts (10) pour un appareil d'évaluation de défauts (10) qui irradie un monocristal (W) avec de la lumière et détecte de la lumière diffusée générée par un défaut cristallin contenu dans le monocristal (W) pour évaluer ainsi le défaut cristallin, comprenant :
l'acquisition d'un indice prenant la forme d'un rapport entre une intensité maximale P1 de la lumière diffusée et une intensité intégrée P2 de celle-ci ; et
le réglage d'une direction de balayage (ΘX) de la lumière par rapport au monocristal (W) de telle sorte que l'indice P1/P2 acquis devienne maximal.
